Europäisches Patentamt

European Patent Office

Office européen des brevets

(11) Publication number: **0 381 179**
**A2**

# EUROPEAN PATENT APPLICATION

(21) Application number: **90101883.8**

(22) Date of filing: **31.01.90**

(51) Int. Cl.5: **C25D 13/02, C03B 37/08,**
**C03B 37/095**

(30) Priority: **01.02.89 US 305351**

(43) Date of publication of application:
**08.08.90 Bulletin 90/32**

(84) Designated Contracting States:
**AT BE CH DE DK ES FR GB GR IT LI LU NL SE**

(71) Applicant: **ENGELHARD CORPORATION**
**Menlo Park, CN 40**
**Edison New Jersey 08818(US)**

(72) Inventor: **Jau-Ho,Jean**
**56C Reading Road**
**Edison, New Jersey 08817(US)**

(74) Representative: **Abitz, Walter, Dr.-Ing. et al**
**Abitz, Morf, Gritschneder, Freiherr von**
**Wittgenstein Postfach 86 01 09**
**D-8000 München 86(DE)**

(54) Process for the electrophoretic deposition of barrier coatings on precious metals.

(57) Objects formed from precious metal are subject to costly weight-loss when they are subjected to lengthly periods at high temperature. Such weight loss can be minimized by the electrophoretic deposition of a thin, uniform layer of ceramic, such as alumina, onto the precious metal. Particular advantage is derived by using such coated precious metal in bushings for the manufacture of fiberglass.

FIG. 1

# PROCESS FOR THE ELECTROPHORETIC DEPOSITION OF BARRIER COATINGS ON PRECIOUS METALS

## Field Of The Invention

This invention relates to electrophoretic processes for coating precious metals, and in one particular aspect relates to a process for the electrophoretic deposition of a ceramic coating, such as alumina or an alumina-containing composition, onto a precious metal surface which is to be subjected to high temperature. In such environment the ceramic coating acts as a barrier layer which prevents the loss of precious metal.

A particular problem which this invention addresses is the loss of precious metal from bushings used in the manufacture of fiberglass. These bushings are essentially blocks of platinum or platinum rhodium alloy which weigh two (2) or more kilograms and which are maintained at temperatures of, for example, $1200^{\circ}$ C. Even though platinum and its alloys are quite to both heat and oxidation, long term exposure to such severe conditions results in a small percentage weight loss, which loss can be very expensive.

It is one object of the present invention to minimize this precious metal weight loss. The invention contemplates reducing this weight loss by coating those surfaces of platinum or platinum alloy bushings, which do not contact molten glass, with a thin layer of ceramic. The present invention is directed to a particular method for placing a protective ceramic coating on precious metal parts such as the described platinum bushings, as well as depositing such coatings on other precious metal surfaces, such as exposed portions of thermocouples.

The invention uses an electrophoretic coating process, which yields a smooth, substantially pore-free, ceramic layer of a protective ceramic composition, such as alumina or an alumina-zirconium oxide. The electrophoretic process deposits ceramic onto precious metal surfaces rapidly and efficiently, without employment of expensive, difficult to control apparatus, such is required in alternative coating procedures.

## Background Of The Art

Electrophoretic deposition of various non-metals onto metals for the purpose of providing electrical insulation is known. For example, Kraner U.S. Patent 1,907,984 discloses the electrophoretic deposition of porcelain onto metallic elements used in thermionic tubes. The Kraner process involves the suspension of clay or other ceramic materials in water and the use of an electric current to deposit the ceramic powders onto the object to be coated. Verwey, U.S. Patent 2,321,439 and Schneider, U.S. 2,442,863 disclose a similar process. Electrophoretic deposition of alumina on metals such as tinplate is also known. See Sumner, U.S. Patent U.S. 2,215,167. Sumner disclosed electrophoretically deposited alumina on tinplate to prevent discoloration caused by sulfur-bearing foodstuffs within tin-plated cans.

Studies involving the electrophoretic deposition of alumina onto stainless steel mandrels, from which the deposits may be removed after drying are reported by Powers, J. Electrochem Soc., Vol. 122, No. 4 at 490-500 (1975); the requirements for powders useful for such depositions were reported in a later study. Powers, Am. Ceram. Soc. Bull., Vol. 65, No. 9, 1277-81 (1986). Fabrication of alumina tubes using this technique was reported by Kennedy, J. Electrochem, Soc., Vol. 122, No. 4, 482-86 (1975).

To applicant's knowledge, no electrophoretic deposition process has been heretofore employed to coat precious metals, such as the bushings used in the manufacture of fiberglass, with ceramic in order to minimize high temperature weight loss.

Glass fibers are made by the rapid attenuation of drops of molten glass exuding through nozzles under gravity and suspended from them. A description of the process for making glass fibers may be found, for example, in K.L. Lowenstein "The Manufacturing Technology Of Continuous Glass Fibers", Glass Science & Technology 6, pages 122-53, Oxford (1983). As described by Lowenstein, the function of a bushing is to provide a plate containing several hundred nozzles at a uniform temperature and to condition the glass to this uniform temperature so that the fibers drawn are of uniform diameter.

To obtain resistance to attack by molten glass and stability at the temperatures needed for fiber drawing, such bushings are commonly made from pure platinum as well as from platinum alloys, both 10% rhodium - 90% platinum and 20% rhodium - 80% platinum being used,the latter being somewhat more resistant to distortion at elevated temperatures.

A 400 nozzle bushing weighs approximately 2000 or 4000 gm. Since the production from such a bushing may lead to not more than about 50-150 tons of saleable product per year, a substantial proportion of the total investment in a glass fiber plant resides in its platinum alloy. Some of this precious metal is lost, and only between about 97 and 99% of the original metal weight is recovered when the bushings are scrapped. One object of the present invention is to reduce this loss.

Although rhodium is presently more expensive than platinum, it has a lower density. As a result, the cost of rhodium-platinum alloys is not significantly different from pure platinum. However, the operating losses of plainum-rhodium alloys are higher than those of platinum. This may be a result of slow oxidation of rhodium in air and evaporation of this oxide from the exposed surfaces of the metal. Areas of metal which are not exposed, i.e. those encased in refractory, also suffer losses, but the oxide apparently dissociates as it cools and some metal condenses in the interior of the refractory from which it can be recovered.

Loss of precious metals from Pt-Rh alloy at $1300^\circ$C in the presence of refractory oxides and air, as well as in fused quartz at a vacuum of $10^{-2}$ to $10^{-3}$ torr, is a recognized phenomenon. After only 60 hours of firing in such an environment samples of precious metal alloy will show surface attack, which is characterized by micron-sized pits and ledged etch patterns.

The actual mechanism of precious metal loss from fiberglass bushings may vary with location on the bushing. The inside of the bushings and the nozzles are exposed to molten glass and gases released by it. However, the sides are typically in contact with castable refractories, primarily $Al_2O_3$ plus $SiO_2$, and in some instances some $ZrO_2$. Loss at those locations will proceed by other mechanisms. It is the exterior of the bushings which the present invention is intended to protect, for the metallic surfaces on the interior of the bushings and nozzles must be in direct contact with the molten glass.

## SUMMARY OF THE INVENTION

It has been discovered that an electrophoretically deposited barrier layer of ceramic on a precious metal surface will greatly retard weight loss which attends long term exposure to high temperatures. The ceramic coating may be selected from such refractory oxides as silica, ceria, titania or alumina or mixtures thereof. Electrophoretic deposition of such ceramics in an acidified low polarity organic solvent having a dielectic constant of from about 12 to 25, for example isopropyl alcohol, proceeds rapidly and gives adherent substantially pore-free coatings which when sintered form a crack-free adherent barrier layer.

This discovery is of particular significance in connection with bushings used in the manufacture of fiberglass. Typically such bushings, which are formed of several kilograms of platinum or platinum/rhodium alloy, are subject to weight loss resulting from long term exposure to high temperatures. When the exterior portions of such bushings, which are not subjected to contact with molten glass, are coated with a barrier layer deposited in accordance with the present invention, substantial cost savings are achieved as a result of a reduction in the weight loss which attends the fiberglass manufacturing process.

## DETAILED DESCRIPTION OF THE INVENTION

The present invention is directed to smooth, crack-free, dense and adherent oxide coatings for precious metals deposited using an electrophoretic deposition process. High deposition rates, up to, for example, 5 microns/sec, are easily achieved using this electrophoretic process. As those skilled in the art will appreciate, this offers a major deposition rate advantage over such alternative coating technologies as, e.g. sputtering or chemical vapor deposition. Furthermore, complex and expensive equipment is not needed to prepare electrophoretic oxide coatings, and this offers another important advantage over other conventional coating methods.

Electrophoresis is an electrokinetic phenomenon in which charged particles, suspended in a liquid, are transported and deposited in an electric field. The particles travel to the electrode independently of one another, just as they do when settling from a suspension under gravity.

The deposition rate is proportional to the time, the concentration of solid, the coated area and the electric field perpendicular to the surface. For a system with constant voltage and current, the deposited weight $\gamma$ is given by:

$$Y = V_\epsilon \xi Ctl/3\eta \ln(r_1/r_2)$$

where V is the applied voltage, $\epsilon$ the dielectric constant of suspension, $\xi$ zeta potential, C concentration of solid, t time, l the length of the coating electrode dipped in the suspension, $\eta$ the static viscosity of the suspension and $r_1$ and $r_2$ the radii of the inner and outer electrodes, respectively.

When conducting an electrophoretic deposition according to the present invention, it is important that flocculation of ceramic powder in the solution be controlled. Flocculation in the body of the solution is quite detrimental to the deposition of a pore-free protective barrier layer, except for such flocculation as may occur immediately near the surface onto which the ceramic is being deposited.

Prevention of flocculation of ceramic powder in solution is dependent upon several factors. One factor involves the use of a solvent with a suitable dielectic constant. Use of a low polarity solvent which possesses a dielectric constant of from about 12 to 25 is preferred. In the following examples isopropyl alcohol was the solvent of choice, its selection being predicated upon its low cost, low toxicity and ready availability. As those skilled in the art will appreciate, other non-polar solvents could readily be selected, it being understood, however, that the solvent must have sufficient polarity to disperse the ceramic powders.

Ceramic powders useful for the precious metal coating process here described include, among others, alumina, mullite, magnesia, ceria, silica, titania, zirconia, and mixtures thereof. The selection of the proper ceramic powder is a matter of choice.

The use of an acid activator for the ceramic powder is also required in order to make the system function. Nitric acid was the acid of choice in the following examples, but any acid which will impart a charge to the dispersed ceramic specie can be employed. For example, sulfuric, hydrochloric, phosphoric or acetic acid can be used as activators.

Acid concentration is also a factor which influences flocculation. In the following examples a concentration of 1 oz. of nitric acid per 100 oz. of isopropyl alcohol was employed. The acid acts to provide a stable suspension, as well as to act as a charge donator to the suspended ceramic, and a nitric acid concentration varying from less than 1 2 that used in the present examples to more than 3 times that amount can be utilized with no discernable difference in dispersion stability.

Once deposited the adherent ceramic layer may be sintered by firing in air. The result is a crack-free adherent coating.

## BRIEF DESCRIPTION OF THE DRAWINGS

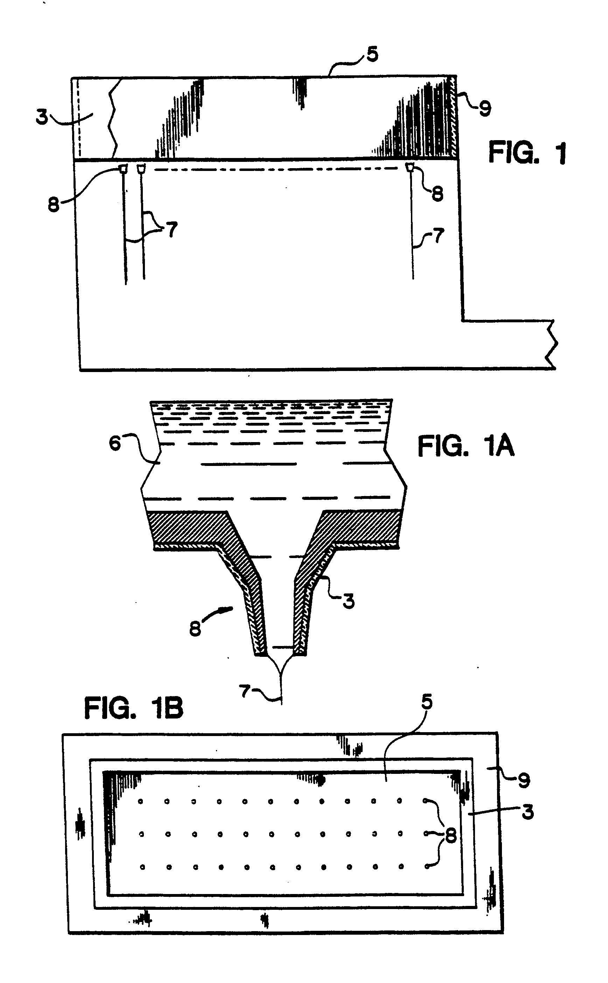

Fig. 1 is a schematic side view of a bushing prepared in accordance with the present invention for use in the manufacture of fiberglass.

Fig. 1**A** is a schematic of an individual nozzle in a bushing such as is depicted in Fig. 1.

Fig. 1**B** is a schematic top view of bushing such as the bushing depicted in Fig. 1.

Fig. 2 is a SEM micrograph of alumina deposited by electrophoresis on platinum.

Fig. 3 is an optical micrograph of an uncoated (black) and a coated (white) platinum-rhodium coupon.

Fig. 4 is an SEM micrograph of the cross section of an alumina coating on platinum.

Fig. 5 depicts the microstructure of the top surface of the alumina coating on platinum fired at 1500° C for two hours.

Fig. 6 depicts the microstructure of the fracture surface of an alumina coating on Pt fired at 1500° C for two hours.

Fig. 7 depicts the microstructure of the top surface of 85% $Al_2O_3$-15% $ZrO_2$ coating on Pt fired at 1500° C for two hours.

Fig. 8 depicts microstructure of the fracture surface of 85% $Al_2O_3$-15% $ZrO_2$ coating on Pt fired at 1500° C for two hours.

Fig. 9 depicts the microstructure of the interface of an 85% $Al_2O_3$-15% $ZrO_2$ coating on Pt fired at 1500° C for two hours.

Fig. 10 depicts the microstructure of the interface of an $Al_2O_3$ coating on Pt-Rh fired at 1500° C for two hours.

Fig. 11 depicts the compostion profiles of Pt and Al across the interface of $Al_2O_3$ on Pt.

Fig. 1 is a schematic representation of a precious metal bushing, 5, which is open at the top to receive molten glass. On the bottom of bushing, 5, is an array of nozzles, 8, through which the molten glass flows to form fibers, 7. The sides of the bushing are coated with a ceramic barrier layer, 3, and the bushing itself is encased in ceramic, 9.

Fig. 1A depicts molten glass, 6, flowing through a nozzle 8, to form a fiber, 7. The barrier layer, 3, is on the outside of the nozzle. In the overview, Fig. 1B, the barrier layer, 3, is shown surrounding the bushing, 5, and is in turn encased in the conventional ceramic layer, 9.

In the following examples a 250 ml stainless steel beaker was used as both container and electrode. The positive electrode was a 3/4" x 3/4" precious metal coupon. The ceramic suspension was stirred continuously with a magnetic stirrer to prevent settling. The deposition voltage was controlled with a variable d.c. power supply. After deposition the samples were dried at room temperature for 30 minutes, and then at 120° for 30 minutes. The deposit was then densified (sintered) at 1500° C in air for two hours. The total porosity and pore size distribution of green compacts were determined by mercury porosimetry. Microstructures of green and sintered compacts were observed by scanning electron microscopy (SEM), and the compositions were determined by EDX.

In the examples in this application the substrate onto which the ceramic powder was deposited was platinum or platinum-rhodium alloy. It should be understood, however, the deposition onto any platinum group metal could be accomplished, as iridium, palladium and osmium exhibit similar behavior toward ceramic coatings.

## EXAMPLES

Thirty gm of $Al_2O_3$ powder was dispersed in 100 gm of isopropanol using a sonicator, and 1 gm of fuming nitric acid was added to the resulting solution as an activator.

A 250 ml stainless steel beaker was used as container and electrode. A coating of the $Al_2O_3$ was deposited directly onto a 0.03"x3/4"x3/4" precious metal coupon of Pt. During the coating process the suspension of oxide was stirred continuously with a magnetic stirrer to prevent the oxide powder from settling. The deposition voltage, which could range from of 0 to 400 V was controlled with a variable dc power supply. A deposition rate of 10 micron/sec was used to prepare the oxide coating and was obtained at a deposition voltage of 50 V. The deposition rate could be increased by increasing the deposition voltage. However, the green density of the coatings was slightly higher with lower deposition voltages. The thickness of coating was easily controlled in the range of 30 to 2000 micron through the change of deposition period or deposition voltage.

After a coating was applied, the microstructure of the coating was characterized by scanning electron microscopy and the chemical compositions were determined by EDX.

The coating process was repeated using 85% $Al_2O_3$ - 15% $ZrO_2$ as the ceramic powder, and was also repeated using a coupon of Pt-10% Rh.

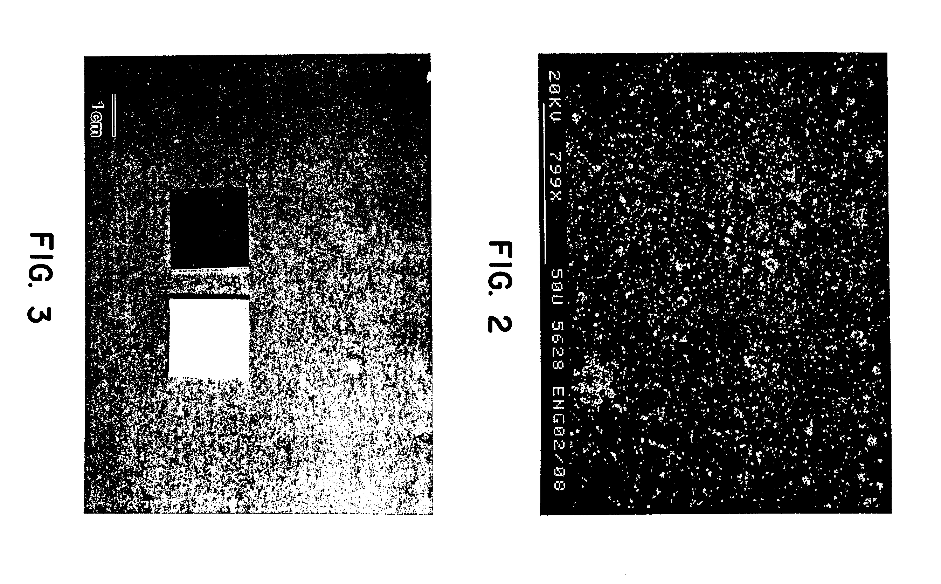

As deposited, the coatings were smooth and crack-free. These are depicted in Figure 2 and 3, Figure 4 shows a cross-section. When the oxide coatings of $Al_2O_3$ or 85% $Al_2O_3$ - 15% $ZrO_2$ on Pt or Pt - 10% Rh were fired at 1500°C for two hours they remained smooth and crack-free. Mechanical tests show that the oxide coatings are adherent.

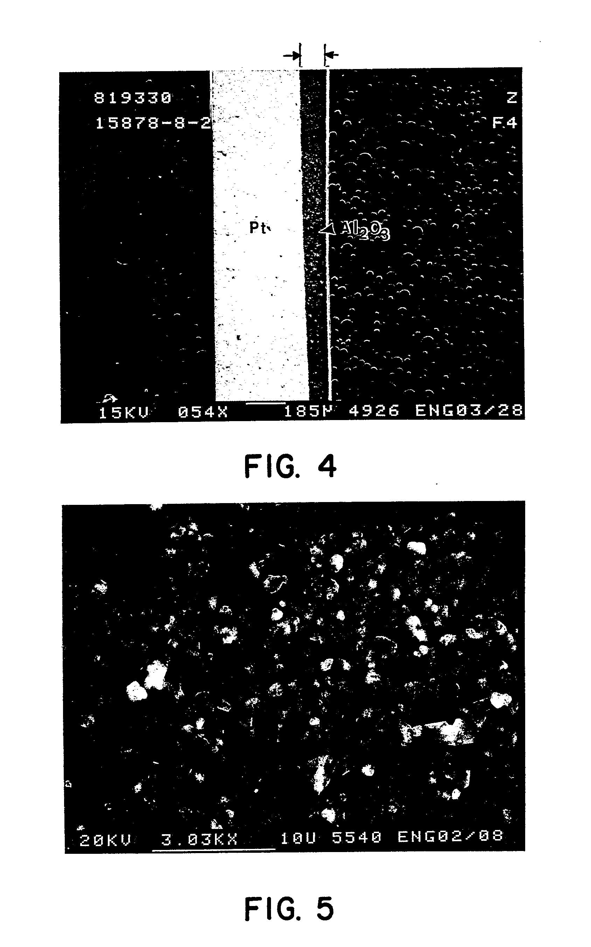

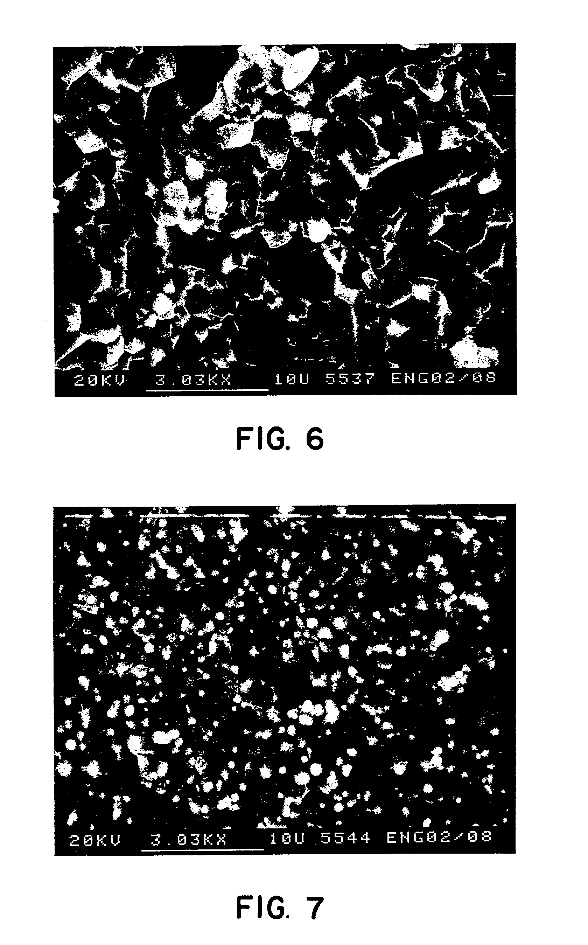

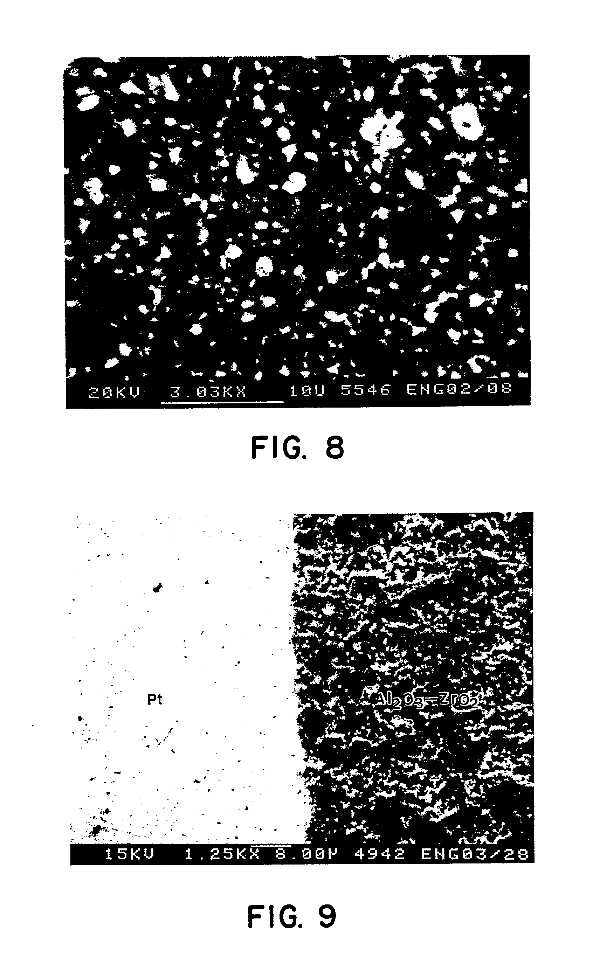

Figure 5 is an SEM micrograph which depicts the microstructures of $Al_2O_3$ coatings on Pt fired at 1500°C in air for two hours while Figure 6 depicts the fracture surface of this coating. A high sintered density, >98%, was obtained. Figures 7 and 8 show the typical microstructures for the system of 85% $Al_2O_3$ > 15% $ZrO_2$ on Pt fired at 1500°C for two hours and are indicative of high sintered density, >98%, small $Al_2O_3$ grains, and uniform distribution of $ZrO_2$ particles in the $Al_2O_3$ matrix.

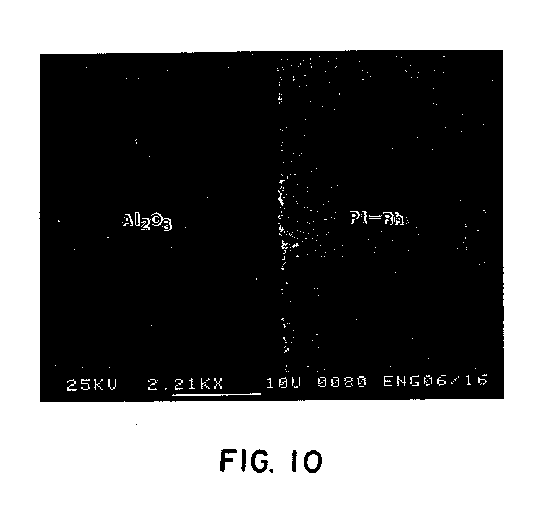

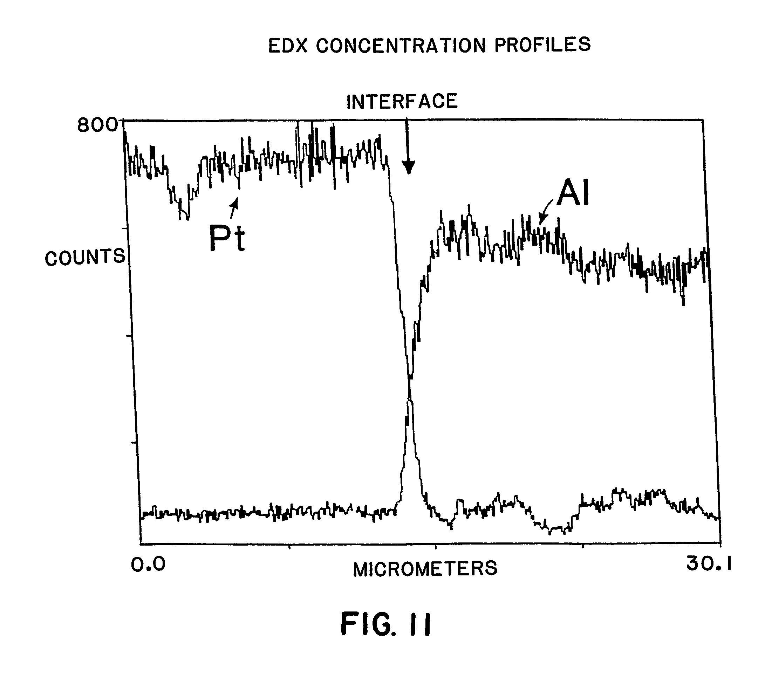

The microstructure of the interface for the system of 85% $Al_2O_3$ - 15% $ZrO_2$ on Pt is depicted in Figure 9. Figure 10 depicts the interface of an $Al_2O_3$ coating on Pt-Rh. No cracks or porosities are observed. The composition profiles of Pt and Al across the interfaces were analyzed by EDX and the results are given in Figure 11 for $Al_2O_3$/Pt system. No interdiffusion or interfacial reaction products is observed, suggesting that the adherent oxide coatings on precious metals is due to mechanical interlocking rather than chemical bonding.

A Pt-Rh substrate was coated with $Al_2O_3$-MgO and the coating was maintained after firing at 1300°C in air for 150 hours, i.e., the coating remained crack-free, and adherent. The weight loss of this coated sample at the above condition was 0.038 wt% (=2.22 wt%/year) which is much less than that of an uncoated sample, (0.203 wt% =11.87 wt%/year).

The adverse effect of water on the electrophoretic deposition was shown by preparing 0.24 $gm/cm^3$ of a solid ceramic powder (85wt% $Al_2O_3$- 15wt% SiC), 0.008 $gm/cm^3$ $HNO_3$ and various concentrations of water. The viscosity of the suspensions increased from 46 cp for a suspension without water to 140 cp for a suspension with 0.016 $gm/cm^3$ water. This demonstrates that the suspension became more flocculated with the addition of water. This was also observed visually. Maximum sediment density was achieved when the suspension contained less than 0.004 $gm/cm^3$ water. An increase in water concentration from 0.004 to 0.03 gm/ml resulted in a reduction in sediment density from 22% to 14% of theoretical. This confirmed that the suspension became less stable with the addition of water.

## Claims

1. An electrophoretic process for the deposition of a ceramic layer on a precious metal comprising the steps of preparing a dispersion of a ceramic powder in a low polarity organic solvent, placing the precious metal to be coated into the solvent, acidifying the solvent to effect a charge transfer and to prevent flocculation of the dispersion except in those portions of the solvent proximate the precious metal surface, and applying a voltage across the solvent such that the ceramic powder deposits on the metal in a smooth, uniform, pore-free layer.

2. The process of claim 1 wherein the ceramic powder contains aluminum oxide.

3. The process of claim 1 wherein the ceramic powder is aluminum oxide or an aluminum oxide-zirconium oxide blend.

4. The process of claim 1 wherein the ceramic powder is selected from alumina, magnesia, silica, ceria, titania and zirconia or mixtures thereof.

5. The process of claim 1 wherein the uniform ceramic barrier layer is sintered in air at a temperature in excess of 1000°C to form a crack-free, adherent coating.

6. The process of claim 1 wherein the precious metal is platinum, a platinum-rhodium alloy or a platinum group metal.

7. The process of claim 1 wherein the solvent is an organic solvent having a dielectic constant of from about 12 to 25, preferably isopropyl alcohol.

8. The process of claim 1 wherein the acidification is effected using an acid selected from the group consisting of nitric, sulfuric, hydrochloric or acetic acid, preferably nitric acid.

9. The process of claim 1 wherein the voltage is regulated such that the deposition rate is about 5 microns/sec.

10. The process of claim 1 wherein the precious metal is in the shape of a container with nozzles in the bottom portion thereof, said nozzles being adapted to permit the formation of glass fibers as a result of gravity induced flow of molten glass therethrough and the ceramic barrier layer is electrophoretically deposited onto the exterior portions of the said container and nozzles, which exterior portions are not subject to contact with said molten glass.

11. A precious metal bushing useful for the production of glass fibers which contains deposited on the exterior surfaces thereof an aluminum oxide containing barrier layer.

12. A method of drawing glass fibers comprising the steps of drawing glass through a precious metal bushing, which bushing contains a ceramic barrier layer deposited thereon, the ceramic layer containing aluminum oxide and the deposition being conducted using electrophoresis.

13. A process for reducing loss of precious metal due to air oxidation and evaporation by placing thereon an electrophoretically deposited barrier layer of ceramic.

14. The process of claim 13 wherein the ceramic powder contains aluminum oxide.

15. The process of claim 13 wherein the ceramic powder is aluminum oxide or an aluminum oxide-zirconium oxide blend.

16. The process of claim 13 wherein the ceramic powder is selected from alumina, magnesia, silica, ceria, titania, zirconia or mixtures thereof.

17. The process of claim 13 wherein the uniform ceramic barrier layer is sintered in air at a temperature in excess of 1000°C to form a crack-free, adherent coating.

18. The process of claim 13 wherein the precious metal is platinum, a platinum-rhodium alloy or a platinum group metal.

19. The process of claim 13 wherein the solvent is an organic solvent having a dielectic constant of from about 12 to 25, preferably isopropyl alcohol.

20. The process of claim 13 wherein the acidification is effected using an acid selected from the group consisting of nitric, sulfuric, hydrochloric or acetic acid, preferably nitric acid.

21. The process of claim 13 wherein the voltage is regulated such that the deposition rate is about 5 microns/sec.

22. The process of claim 13 wherein the precious metal is in the shape of a container with nozzles in the bottom portion thereof, said nozzles being adapted to permit the formation of glass fibers as a result of gravity induced flow of molten glass therethrough and the ceramic barrier layer is electrophoretically deposited onto the exterior portions of the said container and nozzles, which exterior portions are not subject to contact with said molten glass.

FIG. 1

FIG. 1A

FIG. 1B

20KV   799X        50U  5628  ENG02/08

FIG. 2

1cm

FIG. 3

FIG. 4

FIG. 5

FIG. 6

FIG. 7

20KV    3.03KX    10U    5546    ENG02/08

FIG. 8

Pt                    Al₂O₃-ZrO₂

15KV    1.25KX    8.00M    4942    ENG03/28

FIG. 9

FIG. 10

EDX CONCENTRATION PROFILES

FIG. II